(19) Europäisches Patentamt
European Patent Office
Office européen des brevets

(11) **EP 4 564 629 A1**

(12) **EUROPEAN PATENT APPLICATION**

(43) Date of publication:
04.06.2025 Bulletin 2025/23

(21) Application number: 24205949.1

(22) Date of filing: **10.10.2024**

(51) International Patent Classification (IPC):
*H02H 9/02* (2006.01)   *H02M 1/32* (2007.01)
*H02H 7/26* (2006.01)

(52) Cooperative Patent Classification (CPC):
**H02H 3/445; H02H 7/268; H02H 9/025; H02M 1/32**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.11.2023 KR 20230168548**

(71) Applicant: **Korea University of Technology and Education Industry-University Corporation Foundation Cheonan-si, Chungcheongnam-do 31253 (KR)**

(72) Inventors:
• **RHO, Dae-seok**
  **31166 Chungcheongnam-do (KR)**

• **CHOI, Sungmoon**
  **28562 Chungcheongbuk-do (KR)**
• **KIM, Kyung-hwa**
  **31253 Chungcheongnam-do (KR)**
• **KIM, Yunho**
  **31253 Chungcheongnam-do (KR)**
• **YU, Hyeonsang**
  **31253 Chungcheongnam-do (KR)**
• **RHO, Seongeun**
  **31253 Chungcheongnam-do (KR)**

(74) Representative: **Lewis Silkin LLP Arbor 255 Blackfriars Road London SE1 9AX (GB)**

(54) **INTELLIGENT FAULT ISOLATION DEVICE AND OPERATING METHOD THEREOF**

(57)    It is disclosed that an intelligent fault isolation device capable of rapidly and accurately detecting faults based on an inclination angle of fault currents (Sfault1 or Sfault2) according to a line impedance and an operating method thereof. The intelligent fault isolation device that minimizes power failure sections in a low-voltage direct current (LVDC) distribution system includes a plurality of hardware device units and a software device unit. The hardware device units provide a transmission path for current applied from a converter side to a consumer side. The software device unit calculates an inclination angle of a fault current in consideration of the line impedance of each section to determine whether the fault has occurred, and determines that a fault has occurred in section n, when the inclination angle of the fault current is checked to be greater than a corrective value, to limit the fault current in the operation mode of the hardware device unit corresponding to the section among the hardware device units.

FIG. 1

**Description**

CROSS-REFERENCE TO RELATED APPLICATIONS

This application claims priority under 35 U.S.C. § 119 to Korean Patent Application No. 10-2023-0168548, filed on November 28, 2023 in the Korean Intellectual Property Office (KIPO), the contents of which are herein incorporated by reference in their entirety.

BACKGROUND OF THE INVENTION

TECHNICAL FIELD

Exemplary embodiments of the present invention relate to an intelligent fault isolation device (IFID). More particularly, exemplary embodiments of the present invention relate to an intelligent fault isolation device capable of rapidly and accurately detecting faults based on an inclination angle of fault currents according to a line impedance and an operating method thereof.

DISCUSSION OF THE RELATED ART

Recently, the need for research on the DC distribution system is increasing due to the introduction of new and renewable energy sources, the increase of DC loads, and the demand for high quality and high reliability. In addition, when power is supplied by replacing the existing AC distribution system with a DC distribution system, there are advantages such as reducing energy loss and improving the receptivity of distributed power, so research on the DC distribution system is being actively conducted.

However, when a fault occurs in the DC distribution system, there is a possibility that a problem of expanding the power outage section may occur due to the rapid drop of the main converter. Accordingly, since there is a limitation in performing protection cooperation of the DC distribution system in consideration of only the size of the existing fault current, a method of quickly separating the fault section in consideration of the inclination angle, which is the change in the fault current, is required.

SUMMARY

Exemplary embodiments of the present invention provide an intelligent fault isolation device that discriminates fault sections more quickly based on the inclination angle characteristics of a fault current according to line impedance and load size, compared to considering only the magnitude of fault currents, in order to limit the fault currents.

Exemplary embodiments of the present invention also provide a method of operating the above-mentioned intelligent fault isolation device.

According to one aspect of the present invention, an intelligent fault isolation device that minimizes power failure sections in a low-voltage direct current (LVDC) distribution system includes a plurality of hardware device units and a software device unit. The hardware device units provide a transmission path for current applied from a converter side to a consumer side. The software device unit calculates an inclination angle of a fault current in consideration of the line impedance of each section to determine whether the fault has occurred, and determines that a fault has occurred in section n, when the inclination angle of the fault current is checked to be greater than a corrective value, to limit the fault current in the operation mode of the hardware device unit corresponding to the section among the hardware device units.

In an exemplary embodiment of the present invention, the inclination angle of the fault current is calculated by

$$S_{fault}(n) = \frac{\Delta I_{fault}(n)}{\Delta t}$$

, wherein $\Delta I_{fault}(n)$ represents a change of fault current in section, and n represents a section number.

In an exemplary embodiment of the present invention, each of the hardware device units may include a main switch module, a current limit switch module, a current limit resistor, a voltage sensor and a current sensor. The main switch module includes a plurality of main switches connected in series. The current limit switch module includes a plurality of current limit switches connected in series. The current limit resistor is connected in series to a rear end of the current limit switch module. The voltage sensor measures the primary and secondary sides of the hardware unit and the voltage at both ends of the main switch module. The current sensor measures the current of the primary side of the hardware unit, the main current unit and the current limiting unit, respectively.

In an exemplary embodiment of the present invention, the software device unit may include a code composer studio (CCS) tool and a control board. The code composer studio (CCS) tool determines that a fault has occurred and switching to an auxiliary and main operation mode of the intelligent fault isolation device when the calculated inclination angle exceeds a calculated reference value. The control board controls and communicates the hardware device units.

In an exemplary embodiment of the present invention, the CCS tool may control the main switch module and the current limit switch module to quickly switch the operation mode and limit the fault current using the inclination angle characteristics of the fault current.

In an exemplary embodiment of the present invention, the CCS tool may calculate the amount of change and inclination angle of the current for each cycle based on the current collected by the current sensor.

In an exemplary embodiment of the present invention, the control board may include a digital signal processor, a PWM port, an A/D port, a MC control port and a switch control port. The digital signal processor simultaneously controls multiple voltage and current measurements and switches. The PWM port is used for turning on/off the switch of the protection device for separating the fault section and for MC operation. The A/D port converts voltage and current input from sensors in the protection device for separating fault sections into digital signals. The MC control port is used to connect the main converter with the protection device for separating the fault section. The switch control port converts analog voltage and current values input through a sensor of the hardware device unit into digital signals.

According to another aspect of the present invention, there is provided an intelligent fault isolation device that minimizes power failure sections in a low-voltage direct current (LVDC) distribution system. In the method, an inclination angle of a fault current in consideration of the line impedance of each section to determine whether the fault has occurred is calculated. Then, the inclination angle and a corrective value are compared with each other. Then, it is determined that a fault has occurred in section n, when the inclination angle of the fault current is checked to be greater than the corrective value, to limit the fault current in the operation mode of the hardware device unit corresponding to the section among the hardware device units.

In an exemplary embodiment of the present invention, the inclination angle of the fault current is calculated by

$$S_{fault}(n) = \frac{\Delta I_{fault}(n)}{\Delta t}$$

, wherein $\Delta I_{fault}(n)$ represents a change of fault current in section, and n represents a section number.

According to the intelligent fault isolation device and the operating method thereof, it is possible to accurately determine a fault and limit the fault current by calculating the inclination angle of the current in consideration of the line integer and quickly limiting the fault current when the calculated value exceeds a corrective value.

BRIEF DESCRIPTION OF THE DRAWINGS

The above and other features and aspects of the present invention will become more apparent by describing in detailed exemplary embodiments thereof with reference to the accompanying drawings, in which:

FIG. 1 is a graph for explaining fault current characteristics according to a fault location;
FIG. 2 is a graph for explaining fault current characteristics according to load size;
FIG. 3 is a circuit diagram illustrating a configuration of an intelligent fault isolation device according to a comparative example;
FIG. 4 is a waveform diagram for explaining an operation mechanism of the intelligent fault isolation device shown in FIG. 3;
FIG. 5 is a diagram for explaining an operation method of an intelligent fault isolation device having the inclination characteristics of a fault current;
FIG. 6 is a graph for explaining the operation characteristics of intelligent fault isolation device according to the method according to the comparative example and the proposed method according to the present invention;
FIG. 7 is a block diagram illustrating an intelligent fault isolation device according to an exemplary embodiment of the present invention;
FIG. 8 is a diagram for explaining a configuration of a hardware device unit of the intelligent fault isolation device shown in FIG. 7;
FIG. 9 is an equivalent circuit diagram of a fault current in the main operation mode;
FIG. 10 is a block diagram for explaining the software device unit shown in FIG. 7;
FIG. 11 is a graph for explaining an operation characteristic (Case I) of an intelligent fault isolation device according to a comparative example;
FIG. 12 is a graph for explaining an operation characteristic (Case I) of an intelligent fault isolation device according to an exemplary embodiment of the present invention;
FIG. 13 is a graph for explaining an operation characteristic (Case II) of an intelligent fault isolation device according to a comparative example; and

FIG. 14 is a graph for explaining operation characteristics (Case II) of an intelligent fault isolation device according to an exemplary embodiment of the present invention.

DETAILED DESCRIPTION OF THE INVENTION

The present invention is described more fully hereinafter with reference to the accompanying drawings, in which exemplary embodiments of the present invention are shown. The present invention may, however, be embodied in many different forms and should not be construed as limited to the exemplary embodiments set forth herein. Rather, these exemplary embodiments are provided so that this disclosure will be thorough and complete, and will fully convey the scope of the present invention to those skilled in the art. In the drawings, the sizes and relative sizes of layers and regions may be exaggerated for clarity.

It will be understood that when an element or layer is referred to as being "on," "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the FIGS. is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

The terminology used herein is for the purpose of describing particular exemplary embodiments only and is not intended to be limiting of the present invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Exemplary embodiments of the invention are described herein with reference to cross-sectional illustrations that are schematic illustrations of idealized exemplary embodiments (and intermediate structures) of the present invention. As such, variations from the shapes of the illustrations as a result, for example, of manufacturing techniques and/or tolerances, are to be expected. Thus, exemplary embodiments of the present invention should not be construed as limited to the particular shapes of regions illustrated herein but are to include deviations in shapes that result, for example, from manufacturing. For example, an implanted region illustrated as a rectangle will, typically, have rounded or curved features and/or a gradient of implant concentration at its edges rather than a binary change from implanted to non-implanted region. Likewise, a buried region formed by implantation may result in some implantation in the region between the buried region and the surface through which the implantation takes place. Thus, the regions illustrated in the FIGS. are schematic in nature and their shapes are not intended to illustrate the actual shape of a region of a device and are not intended to limit the scope of the present invention.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, the present invention will be explained in detail with reference to the accompanying drawings.

When a fault occurs in a low-voltage direct current (LVDC) distribution system, a magnitude of a fault current and an inclination angle of the fault current have different characteristics depending on the number of lines to a fault point and a magnitude of the load.

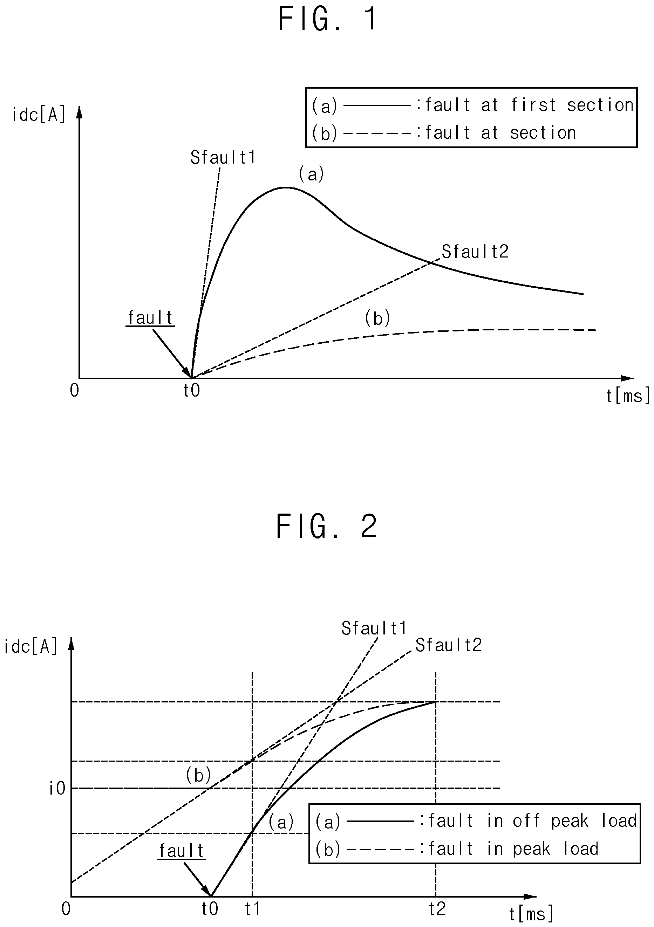

FIG. 1 is a graph for explaining fault current characteristics according to a fault location. In particular, FIG. 1 shows the characteristics of fault current according to the fault point, and curves (a) and (b) of FIG. 1 represent cases in which faults occur at the direct and terminal points of the LVDC distribution line, respectively.

As shown in the curve (a) of FIG. 1, in the case of a direct fault, a very large fault current is generated based on t0, which is the time zone for the fault, due to the low impedance to the fault point, and the change in the fault current is large. As shown in the curve (b) of FIG. 1, in the case of a terminal fault, a relatively smaller fault current than the curve (a) occurs due to the large impedance component of the line, so the change in the fault current is small.

FIG. 2 is a graph for explaining fault current characteristics according to load size.

The variation of the fault current under no load is initially large as shown in a curve (a) of FIG. 2, and the variation of the fault current under the peak load has a small value initially as shown in a curve (b) of FIG. 2. That is, an inclination angle of the fault current under no load is large, and the inclination angle of the fault current under the peak load is small.

Therefore, the present invention proposes an operation plan for an intelligent fault isolation device that minimizes the power failure section by quickly and accurately determining the fault based on the inclination angle of the fault current according to the line integer and load size.

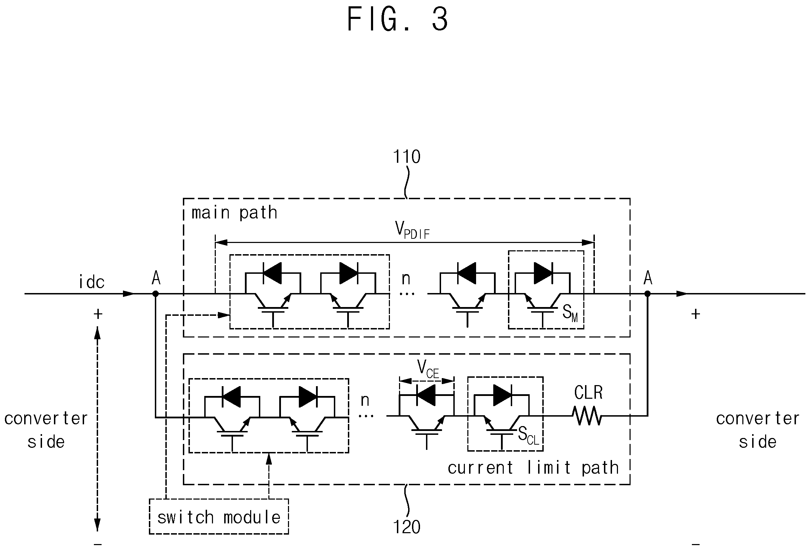

FIG. 3 is a circuit diagram illustrating a configuration of an intelligent fault isolation device according to a comparative example.

Referring to FIG. 3, an intelligent fault isolation device 100 according to a comparative example includes a main path 110, a current limit path 120 and a switching module 130 to provide a current transmission path from a converter side to a customer side.

The main path 110 includes a plurality of main switches S.!J connected to each other in series. The number of main switches $S_M$ in FIG. 3 is n. Each of the main switches $S_M$ includes a first insulated gate bipolar transistor (IGBT) and a second IGBT. The first IGBT and the second IGBT are semiconductor switches that have a high internal pressure and operate quickly within a few $\mu$s. In order to control current in both directions, an emitter of the first IGBT and an emitter of the second IGBT are connected in common.

The current limit path 120 includes a plurality of current limiting switches $S_{CL}$ connected in series and a current limiting resistor CLR connected in series to a rear end of the last current limiting switch. The number of current limiting switches $S_{CL}$ in FIG. 3 is n. Each of the current limiting switches $S_{CL}$ includes a third IGBT and a fourth IGBT. The third IGBT and the fourth IGBT are semiconductor switches (MOSFETs) that have a high internal pressure and operate quickly within a few milliseconds. In order to control a current in both directions, the emitter of the third IGBT and the emitter of the fourth IGBT are connected in common. The current limiting switches $S_{CL}$ have the same shape as the main switches $S_M$. Here, the sizes of the first IGBT and the second IGBT provided in the main switch $S_M$ may be the same, and the sizes of the third IGBT and the fourth IGBT provided in the current limiting switches $S_{CL}$ may be the same. Here, the sizes of the first to fourth IGBTs may be defined by a channel width to a channel length W/L. Also, the size of the first IGBT provided in the main switch $S_M$ may be the same as the size of the third IGBT provided in the current limiting switches $S_{CL}$.

When it is checked that a fault current is generated due to a rapid increase in the DC current applied to the main path 110, the switching module 130 turns off an operation of the main path 110 and turns on an operation of the current limit path 120.

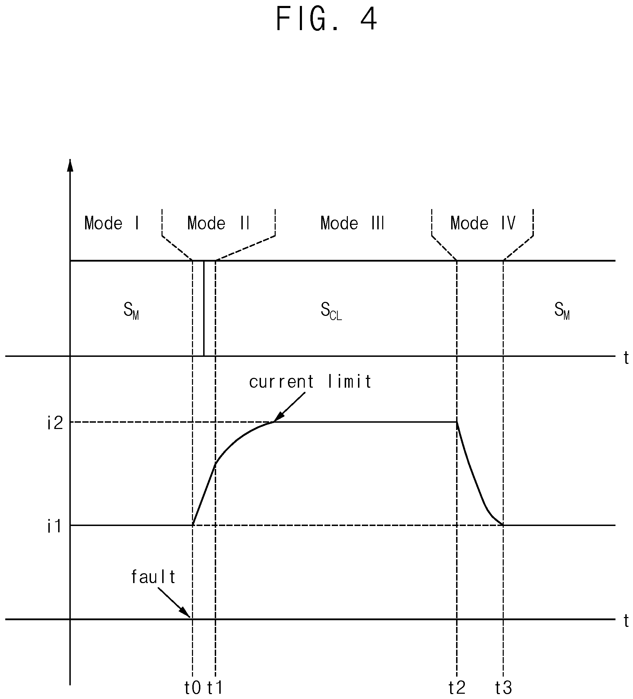

FIG. 4 is a waveform diagram for explaining an operation mechanism of the intelligent fault isolation device shown in FIG. 3.

Referring to FIG. 3 and FIG. 4, the operational mechanism of the intelligent fault isolation device may be divided into an initial operation mode (Mode I), an auxiliary operation mode (Mode II), a main operation mode (Mode III) and a recovery operation mode (Mode IV).

The concept of current limitation in the main operation mode (Mode III) is to limit the fault current $i$ to a certain value $i_2$ until the $t_2$ time zone when the fault occurs in $t$, when the intelligent fault isolation device starts operating during the $t_1$ time zone and the fault section is separated. In other words, a fault current is induced to a current limiter through MOSFET switching and the fault current is consumed by a resistance installed in the current limiter, so that a main converter is kept constant with a current that does not fall out.

When a fault occurs in the DC distribution system, there is a possibility that the power failure section may be expanded due to the rapid drop of the main converter. Therefore, since there is a limit to the protection of the DC distribution system only by the magnitude of the fault current, there is a need for a method to separate the fault section within a faster time in consideration of the inclination angle, which is a change in the fault current.

Accordingly, the present invention proposes a method of operating an intelligent fault isolation device based on the inclination angle of the fault current in the LVDC distribution system.

First, the inclination angle $S_{fault}(n)$ of the fault current considering the line impedance of each section to determine whether a fault has occurred is calculated as shown in Equation (1). Here, the inclination angle $S_{fault}(n)$ is calculated by considering the change $\Delta I_{fault}(n)$ of the fault current according to the line integer in section n.

$$S_{fault}(n) = \frac{\Delta I_{fault}(n)}{\Delta t}$$

(Equation 1)

Wherein, $S_{fault}(n)$ represents inclination characteristic of fault current in section, $\Delta I_{fault}(n)$ represents variation of fault current within section, and n represents a section number.

Based on the above Equation (1), the control signal $Z(n)$ I of the intelligent fault isolation device for each section in the LVDC distribution system may be represented as the following Equation (2).

$$Z(n) = \begin{cases} 1 & \text{if } S_{fault}(n) > S_{set}(n) \\ 0 & otherwise \end{cases}$$

(Equation 2)

Wherein, $Z(n)$ represents an operation signal of an intelligent fault isolation device in section n.

In other words, when $S_{fault}(n)$ is larger than a corrective value $S_{set}(n)$, it is determined that a fault has occurred in section n, and a fault current is limited according to a control signal in an operation mode of the intelligent fault isolation device in the section.

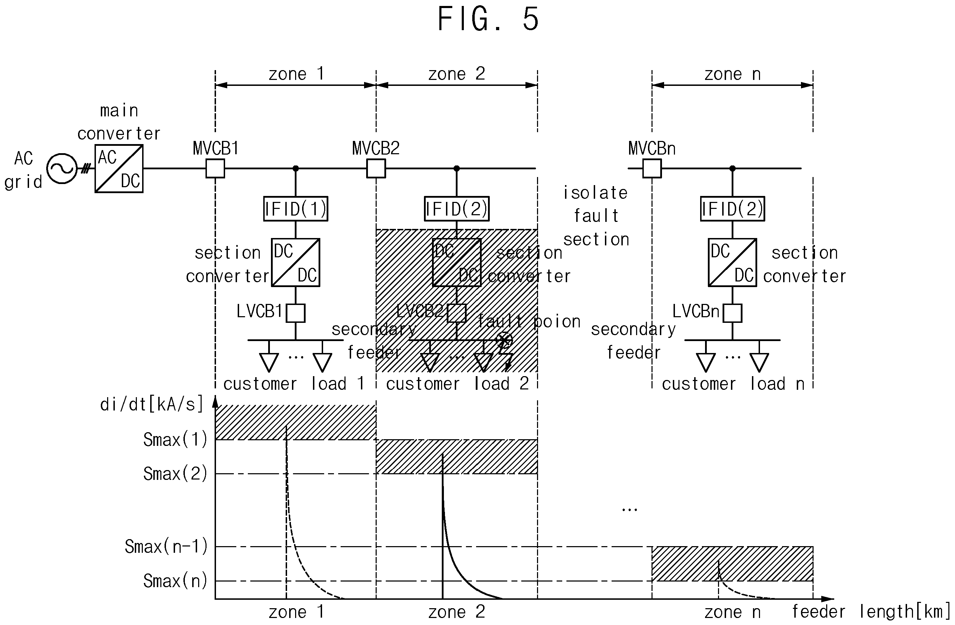

Therefore, a method of operating an intelligent fault isolation device of the LVDC distribution system considering the inclination angle of the fault current presented above may be shown as in FIG. 5.

FIG. 5 is a diagram for explaining an operation method of an intelligent fault isolation device having the inclination characteristics of a fault current.

Referring to FIG. 5, when a fault occurs in section 2, the second intelligent fault isolation device $IFID(2)$ is quickly operated using the inclination angle of the fault current to limit the fault current to a size such that the main converter does not operate. Accordingly, time for the section converter to be dropped is secured, and the spread of the fault in the entire section is minimized.

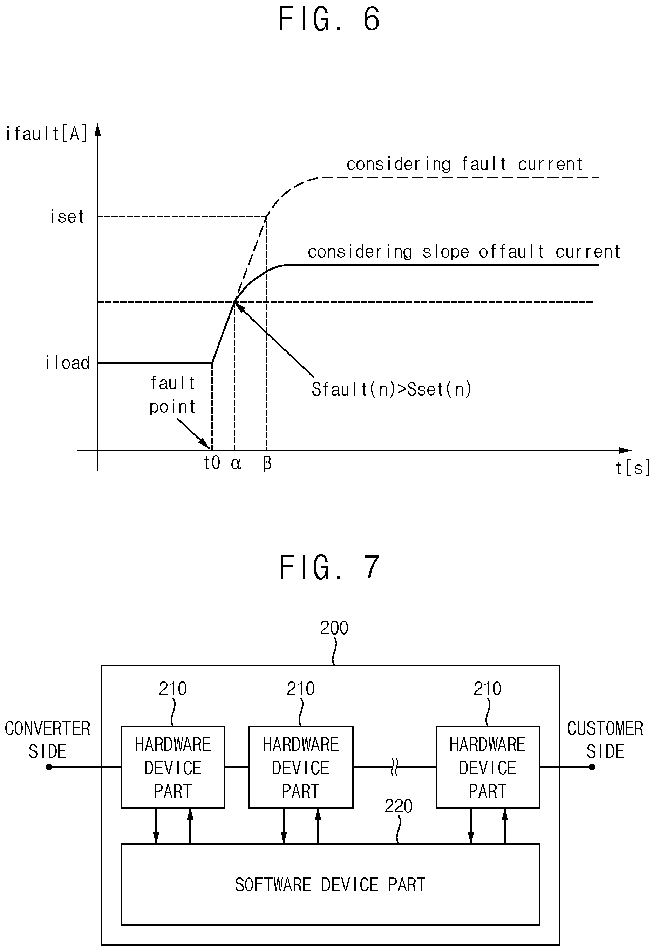

Operational characteristics of the intelligent fault isolation device, considering only a magnitude of the fault current versus considering both a magnitude and an inclination angle of the fault current are depicted in FIG. 6.

FIG. 6 is a graph for explaining the operation characteristics of intelligent fault isolation device according to the method according to the comparative example and the proposed method according to the present invention.

Referring to FIG. 6, when only a size of a fault current, which is a method according to a comparative example, is considered, an occurrence of a fault is determined at a β point where the size of the fault current reaches a set value $I_{set}$, and intelligent fault isolation device switches to an auxiliary and main operation mode.

On the other hand, when the inclination angle characteristics of a fault current are considered according to the present invention, a fault is determined at a α point where the inclination angle $S_{fault}(n)$ of the fault current exceeds a corrective value $S_{set}(n)$ and the fault current is restricted more quickly than when only the load current size is considered, thereby shortening the operation time of the intelligent fault isolation device.

FIG. 7 is a block diagram illustrating an intelligent fault isolation device according to an exemplary embodiment of the present invention.

Referring to FIG. 7, an intelligent fault isolation device 200 according to one embodiment of the present invention includes a plurality of hardware device units 210 and a software device unit 220.

The hardware device units 210 are interconnected between a converter side and a customer side to provide a current transmission path.

The software device unit 220 calculates the inclination angle $S_{fault}(n)$ of the fault current in consideration of the line impedance of each section for determining whether the fault has occurred. When it is checked that the inclination angle $S_{fault}(n)$ of the fault current is greater than a corrective value $S_{set}(n)$, the software device unit 220 determines that a fault has occurred in an n-th section and limits the fault current in the operation mode of the hardware device unit corresponding to the corresponding section among the hardware device units 210.

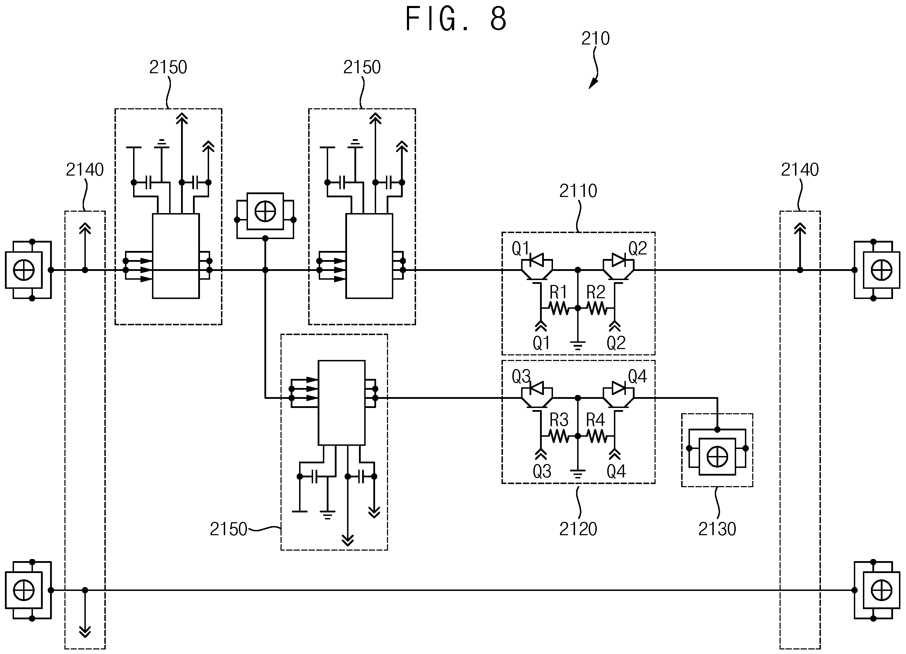

FIG. 8 is a diagram for explaining a configuration of a hardware device unit of the intelligent fault isolation device 200 shown in FIG. 7.

Referring to FIGS. 7 and 8, the hardware unit 210 of the intelligent fault isolation device 200 according to an exemplary embodiment of the present invention includes a main switch module 2110, a current limit switch module 2120, a current limit resistor 2130, a voltage sensor 2140, a current sensor 2150 and a SMPS (not shown).

The main switch module 2110 and the current limit switch module 2120 are applied to a main path and a current limit path, respectively, and are composed of a gate drive and a SMPS to independently operate them. The main switch module 2110 includes a plurality of main switches connected in series. The current limit switch module 2120 includes a plurality of current limit switches connected in series. In FIG. 8, although the gate drive and the SMPS are omitted, G1, G2, G3 and G4 are shown at the gate terminals of the semiconductor switch MOSFET provided in the main switch module 2110 and the current limit switch module 2120.

The voltage sensor 2140 is composed of three to measure the primary and secondary voltages of the corresponding hardware device unit and the voltages at both ends of the main switch module 2110.

The current sensor 2150 is composed of three to measure the current of the primary side, the main path and the current limit path of the corresponding hardware device unit, respectively.

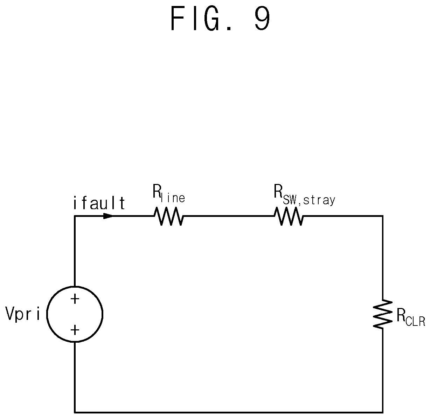

On the other hand, when the protection device for separating a fault section is in a main operation mode, an equivalent circuit diagram for the fault current may be expressed as shown in FIG. 9.

FIG. 9 is an equivalent circuit diagram of a fault current in the main operation mode.

Referring to FIG. 9, a voltage applied to a current limit resistor $R_{CLR}$ is distributed to a line impedance and a parasitic resistance of a semiconductor switch, respectively. Therefore, a current limit resistance value is calculated by subtracting a line impedance value $R_{line}$ and a parasitic resistance value $R_{SW,sfray}$ of the semiconductor switch from a value obtained by dividing a supply voltage $v_{pri}$ by a rated current $i_{n,max}$ and overload resistance $k_m$ of a main converter as shown in the following Equation (3).

$$R_{CLR} = \frac{v_{pri}}{k_m \times i_{n,\max}} - R_{line} - R_{SW,stray}$$

(Equation 3)

Wherein, $R_{CLR}$ represents a current limit resistace, $v_{pri}$ represents a system voltage, $k_m$ represents a margin of main converter, $i_{n,max}$ represents a rated current of main converter, $R_{line}$ represents a line impedance, $R_{line}$ represents a stray resistance of semiconductor switch.

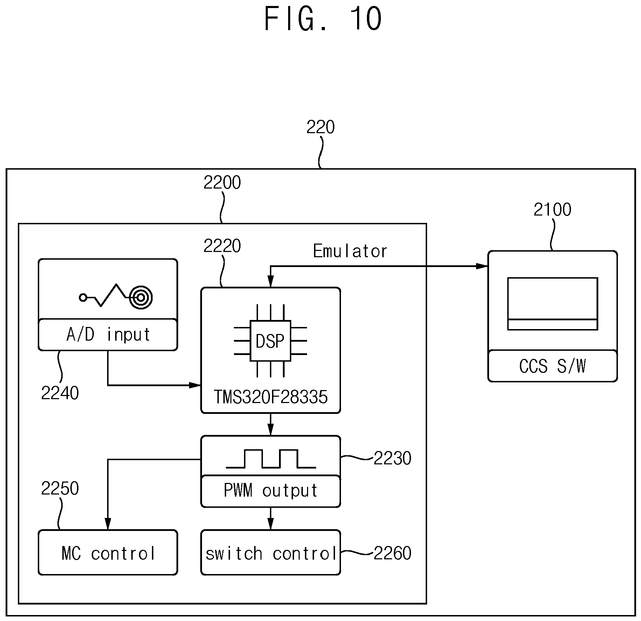

FIG. 10 is a block diagram for explaining the software device unit shown in FIG. 7.

Referring to FIG. 7 and FIG. 10, the software device unit 220 of the intelligent fault isolation device 200 according to an embodiment of the present invention includes a code composer studio (CCS) tool 2100 and a control board 2200 responsible for controlling and communicating the hardware device units.

The CCS tool 2100 is an integrated development environment (IDE) for Texas Instruments (TI) processors and has real-time control, debugging functions, and monitoring functions of semiconductor devices (IGBT and MOSFET). Furthermore, the CCS tool 2100 performs the function of controlling the main and current limiting switch modules to quickly switch the operation mode and limit the fault current using an inclination angle of the fault current based on the operation method of the intelligent fault isolation device 200. That is, the CCS tool 2100 calculates the amount of change and inclination angle of the current collected by the current sensor for each cycle (10 μs).

When the calculated inclination angle exceeds a set reference value, the CCS tool 2100 determines that a fault has occurred and switches to the auxiliary and main operation mode of the intelligent fault isolation device 200.

The control board 2200 includes a digital signal processor (DSP) 2220, a pulse width modulation (PWM) port 2230, an A/D port 2240, an MC control port 2250 and a switch control port 2260.

The DSP 2220 independently controls each element. The DSP 2220 operates with a clock of 150 MHz, and may use a total of 12 PWM ports 2230 and 16 ADC channels, for example, to measure multiple voltages and currents and control the switch simultaneously. That is, the software device unit 220 including the DSP 2220 may be connected to several hardware device units 210 to measure voltage and current using voltage and current sensors provided in each of the hardware device units 210, and may turn-on/off switches provided in each of the hardware device units 210.

The pulse width modulation port 2230 is used for the turn-on/off and MC operation of the switch of the protection device for separating a fault section.

The A/D port 2240 converts a voltage and a current input from a sensor in the hardware device unit 210 of the protection device for separating a fault section into a digital signal.

The MC control port 2250 is used for connection between the protection device for separating a fault section and the main converter.

The switch control port 2260 converts analog voltage and current values input through a sensor of the hardware device unit 210 into digital signals, and then performs switch control using an interrupt operation method.

Hereinafter, test results and analysis will be described.

The test conditions for analyzing the operational characteristics of the intelligent fault isolation device considering the inclination angle characteristics proposed by the present invention are shown in Table 1. Here, two MOSFET switch modules used in the intelligent fault isolation device are assumed to be in consideration of the drain-source internal pressure and the usage rate. In addition, the current limit resistor $R_{CLR}$ is assumed to be 5.8 [Ω] and the output voltage of the AC system is assumed to be a single phase 220 [V]. On the other hand, the main converter unit is composed of an AC/DC converter of 20 [kW] capacity, and the input and output side voltages are 220 [Vac] and 350 [Vdc], respectively. Moreover, two cases of simulated line impedance are considered as a reduced model of a high-voltage line.

Table 1

| items | | | contents |
|---|---|---|---|
| intelligent fault isolation device | switching modules | type | MOSFET |
| | | number of modules[EA] | 2 |
| | | drain-source breakdown voltage[V] | 650 |
| | | load factor of insulation voltage[%] | 60 |
| | | turn-on delay time[ns] | 20 |
| | | turn-off delay time[ns] | 82 |
| | current limit resistor[$\Omega$] | | 5.8 |
| AC grid | rated voltage[$V_{ac}$] | | 220 |
| main converter | rated capacity[kW] | | 20 |
| | input voltage[$V_{ac}$] | | 380 |
| | output vottage[$V_{dc}$] | | 350 |
| line impedance | Case I | | 624.9[m$\Omega$]+3.571[mH] |
| | Case II | | 937.3[m$\Omega$]+5.356[mH] |

According to the test conditions presented above, the operation characteristics of intelligent fault isolation device considering only the magnitude of the fault current based on a line impedance of Case I may be represented as shown in FIG. 10.

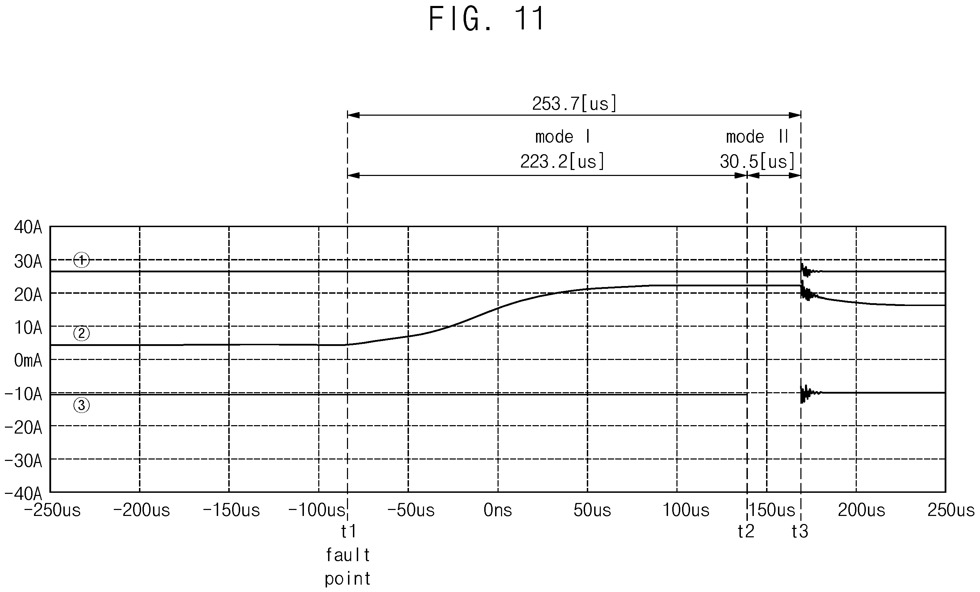

FIG. 11 is a graph for explaining an operation characteristic (Case I) of an intelligent fault isolation device according to a comparative example.

Graphs ①, ② and ③ of FIG. 11 represent the gate drive voltage of the main path, the magnitude of the current flowing to the secondary side of the main converter, and the gate drive voltage of the current limit path, respectively.

As shown in FIG. 11, when a fault occurs at a point, the intelligent fault isolation device switches to an auxiliary operation mode after about 223.2 [$\mu$s] and turns on the current limit path. After about 30.5 [$\mu$s] from the point, the intelligent fault isolation device switches to a main operation mode and blocks the main path. Therefore, when only a magnitude of the fault current is considered, it may be seen that the intelligent fault isolation device may limit the fault current after about 253.7 [$\mu$s] after the fault occurs.

On the other hand, according to the test conditions presented above, the operational characteristics of the intelligent fault isolation device considering the inclination angle of the fault current based on the line impedance of Case I may be expressed as in FIG. 11.

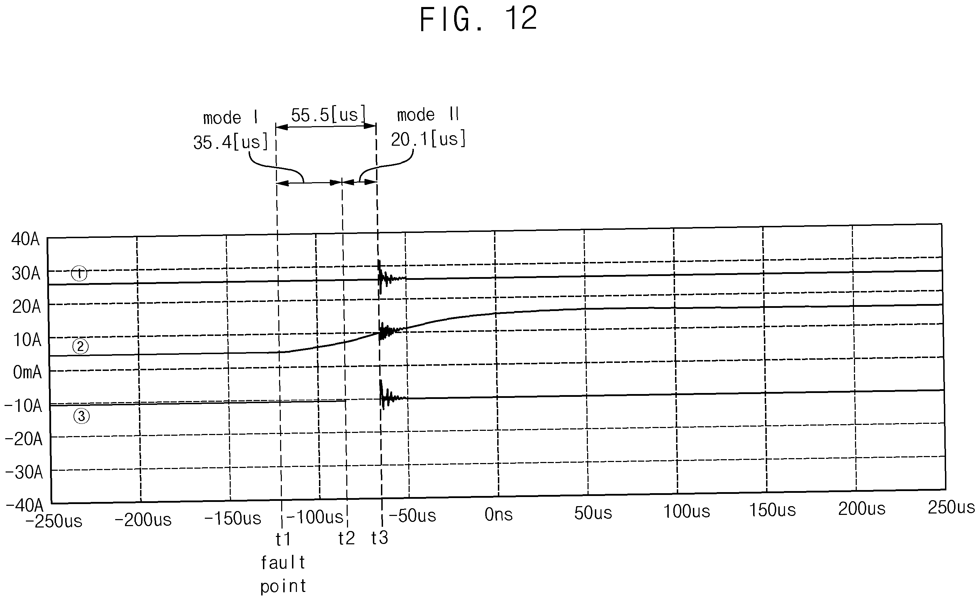

FIG. 12 is a graph for explaining an operation characteristic (Case I) of an intelligent fault isolation device according to an exemplary embodiment of the present invention.

Graphs ①, ② and ③ of FIG. 12 represent the gate drive voltage of the main path, the magnitude of the current flowing to the secondary side of the main converter, and the gate drive voltage of the current limit path, respectively.

As shown in FIG. 12, when a fault occurs at a point, the intelligent fault isolation device switches to the auxiliary operation mode after about 35.4 [$\mu$s] and turns on the current limit path. After about 20.1 [$\mu$s] from the point, the intelligent fault isolation device switches to the main operation mode and blocks the main path. Therefore, when considering the inclination angle of the fault current, it may be seen that the intelligent fault isolation device can limit the fault current within about 55.5 [$\mu$s] after the fault occurs. Moreover, it may be seen that the intelligent fault isolation device considering the inclination angle characteristic of the fault current can quickly determine whether a fault has occurred or not by 198 [$\mu$s] faster than the intelligent fault isolation device considering only the magnitude of the fault current and limit the fault current by switching to the auxiliary and main operation mode.

On the other hand, according to the test conditions presented above, the operational characteristics of the intelligent fault isolation device considering only the magnitude of the fault current based on the line impedance condition of Case II may be expressed as in FIG. 12.

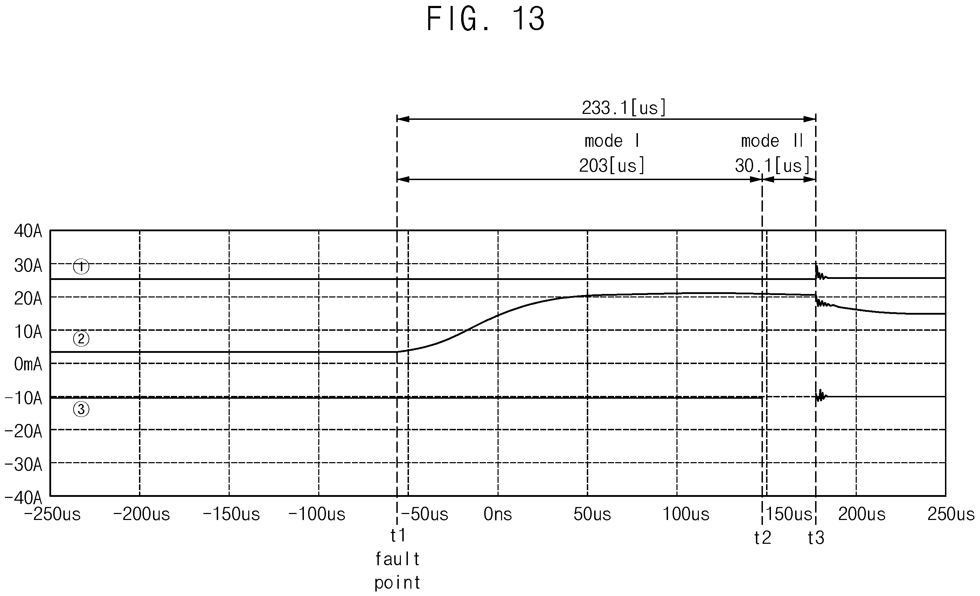

FIG. 13 is a graph for explaining an operation characteristic (Case II) of an intelligent fault isolation device according to a comparative example.

Graphs ①, ② and ③ of FIG. 13 represent the gate drive voltage of the main path, the magnitude of the current flowing to the secondary side of the main converter, and the gate drive voltage of the current limit path, respectively.

As shown in FIG. 13, when a fault occurs at a point, the intelligent fault isolation device switches to the auxiliary operation mode after about 203 [$\mu$s] and turns on the current limit path. Within about 30.1 [$\mu$s] from the point, the intelligent fault isolation device switches to the main operation mode and blocks the main path. Therefore, when only the magnitude of the fault current is considered, it may be seen that the intelligent fault isolation device may limit the fault current within about 233.1 [$\mu$s] after the fault occurs.

On the other hand, according to the test conditions presented above, the operational characteristics of the intelligent fault isolation device considering the inclination angle of the fault current based on the line impedance condition of Case II may be expressed as shown in FIG. 13.

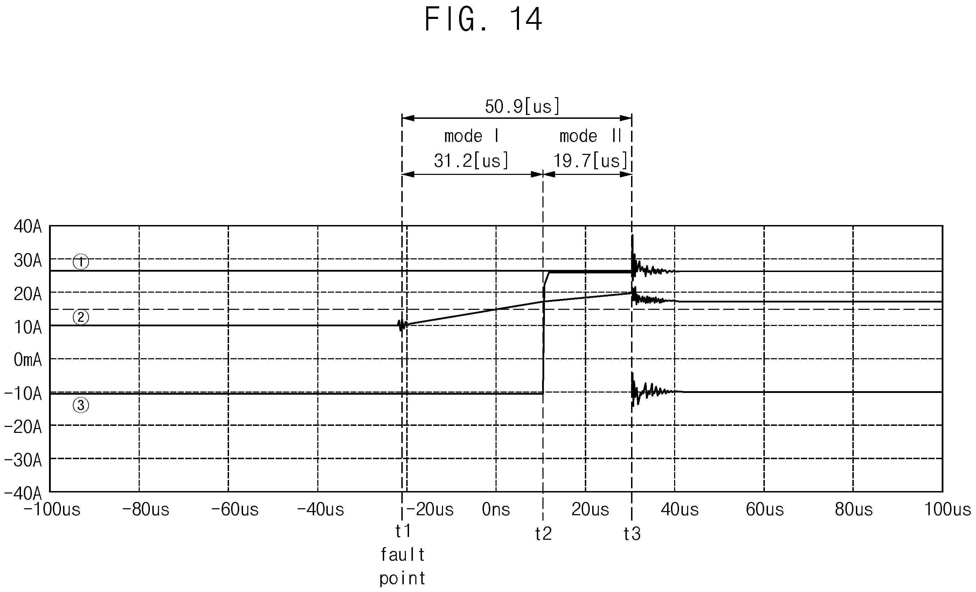

FIG. 14 is a graph for explaining operation characteristics (Case II) of an intelligent fault isolation device according to an exemplary embodiment of the present invention.

Graphs ①, ② and ③ of FIG. 14 represent the gate drive voltage of the main path, the magnitude of the current flowing to the secondary side of the main converter, and the gate drive voltage of the current limit path, respectively.

As shown in FIG. 14, when a fault occurs at a point, the intelligent fault isolation device switches to the auxiliary operation mode within about 31.2 [$\mu$s] to turn-on the current limit path, and switches to the main operation mode within about 19.7 [$\mu$s] from the point to block the main path.

Therefore, when considering the inclination angle of the fault current, it may be seen that the intelligent fault isolation device may limit the fault current within about 50.9[$\mu$s] after the fault occurs.

In addition, it may be seen that the intelligent fault isolation device considering the inclination angle characteristics of the fault current may determine the occurrence of a fault 182[$\mu$s] faster than the intelligent fault isolation device considering only the size of the fault current and limit the fault current by switching to auxiliary and main operation mode.

This invention presents a method of operating an intelligent fault isolation device that determines the fault section faster and limits the fault current based on the inclination angle characteristics of the fault current according to the line integer and the load size than when only the size of the fault current is considered. The main research results for this are summarized as follows.

(1) Regarding the line impedance condition of Case I, it may be seen that the intelligent fault isolation device considering only the size of the fault current can limit the fault current after about 253.7[$\mu$s] after the fault occurs. In addition, it may be seen that the intelligent fault isolation device considering only the size of the fault current for the line impedance condition of Case II can limit the fault current after about 233.1[$\mu$s] after the fault occurs.

(2) Regarding the line impedance condition of Case I, it may be seen that the intelligent fault isolation device considering the inclination angle characteristics of the fault current can limit the fault current within about 55.5[$\mu$s] after the fault occurs. In addition, for the line impedance condition of Case II, it may be seen that the intelligent fault isolation device considering the inclination angle characteristics of the fault current can limit the fault current within about 50.9 [$\mu$s] after the fault occurs.

(3) It may be seen that the intelligent fault isolation device considering the inclination angle characteristics of the fault current presented in this invention can quickly and accurately determine the occurrence of a fault by 198[$\mu$s] in Case I and 182[$\mu$s] in Case II, and limit the fault current by switching to auxiliary and main operation mode.

As described above, according to the present invention, it is possible to accurately determine a fault and limit the fault current by calculating the inclination angle of the current in consideration of the line integer and quickly limiting the fault current when the calculated value exceeds a corrective value.

Having described exemplary embodiments of the present invention, it is further noted that it is readily apparent to those of reasonable skill in the art that various modifications may be made without departing from the spirit and scope of the invention which is defined by the metes and bounds of the appended claims.

**Claims**

1. An intelligent fault isolation device that minimizes power failure sections in a low-voltage direct current (LVDC) distribution system, comprising:

   a plurality of hardware device units providing a transmission path for current applied from a converter side to a consumer side; and
   a software device unit calculating an inclination angle of a fault current in consideration of the line impedance of each section to determine whether the fault has occurred, and determining that a fault has occurred in section n, when the inclination angle of the fault current is checked to be greater than a corrective value, to limit the fault current in the operation mode of the hardware device unit corresponding to the section among the hardware device units.

2. The intelligent fault isolation device of claim 1, wherein the inclination angle of the fault current is calculated by:

$$S_{fault}(n) = \frac{\Delta I_{fault}(n)}{\Delta t},$$

wherein, $\Delta I_{fault}(n)$ represents a change of fault current in section, and n represents a section number.

3. The intelligent fault isolation device of claim 2, wherein each of the hardware device units comprises:

a main switch module comprising a plurality of main switches connected in series;
a current limit switch module comprising a plurality of current limit switches connected in series;
a current limit resistor connected in series to a rear end of the current limit switch module;
a voltage sensor measuring the primary and secondary sides of the hardware unit and the voltage at both ends of the main switch module; and
a current sensor measuring the current of the primary side of the hardware unit, the main current unit and the current limiting unit, respectively.

4. The intelligent fault isolation device of claim 3, wherein the software device unit comprises:

a code composer studio (CCS) tool determining that a fault has occurred and switching to an auxiliary and main operation mode of the intelligent fault isolation device when the calculated inclination angle exceeds a calculated reference value; and
a control board controlling and communicating the hardware device units.

5. The intelligent fault isolation device of claim 4, wherein the CCS tool controls the main switch module and the current limit switch module to quickly switch the operation mode and limit the fault current using the inclination angle characteristics of the fault current.

6. The intelligent fault isolation device of claim 4, wherein the CCS tool calculates the amount of change and inclination angle of the current for each cycle based on the current collected by the current sensor.

7. The intelligent fault isolation device of claim 4, wherein the control board comprises:

a digital signal processor simultaneously controlling multiple voltage and current measurements and switches;
a PWM port used for turning on/off the switch of the protection device for separating the fault section and for MC operation;
an A/D port that converts voltage and current input from sensors in the protection device for separating fault sections into digital signals;
a MC control port used to connect the main converter with the protection device for separating the fault section; and
a switch control port for converting analog voltage and current values input through a sensor of the hardware device unit into digital signals.

8. An operating method of an intelligent fault isolation device that minimizes power failure sections in a low-voltage direct current (LVDC) distribution system, the method comprising:

calculating an inclination angle of a fault current in consideration of the line impedance of each section to determine whether the fault has occurred;
comparing the inclination angle and a corrective value; and
determining that a fault has occurred in section n, when the inclination angle of the fault current is checked to be greater than the corrective value, to limit the fault current in the operation mode of the hardware device unit corresponding to the section among the hardware device units.

9. The operating method of claim 8, wherein the inclination angle of the fault current is calculated by:

$$S_{fault}(n) = \frac{\Delta I_{fault}(n)}{\Delta t},$$

wherein, $\Delta I_{fault}(n)$ represents a change of fault current in section, and n represents a section number.

$$S_{fault}(n) = \frac{\Delta I_{fault}(n)}{\Delta t}$$

# FIG. 1

# FIG. 2

# FIG. 3

EP 4 564 629 A1

# FIG. 4

FIG. 5

# FIG. 6

# FIG. 7

FIG. 8

# FIG. 9

# FIG. 10

FIG. 11

# FIG. 12

EP 4 564 629 A1

FIG. 13

# FIG. 14

50.9[us]

mode I
31.2[us]

mode II
19.7[us]

t1
fault
point

t2

t3

EP 4 564 629 A1

Europäisches Patentamt
European Patent Office
Office européen des brevets

# EUROPEAN SEARCH REPORT

**Application Number**

EP 24 20 5949

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KR 102 566 804 B1 (UNIV KOREA IND UNIV COOP FOUND [KR]) 16 August 2023 (2023-08-16) * Manual translation enclosed; the whole document * | 1-9 | INV. H02H9/02 H02M1/32 H02H7/26 |
| Y | MEGHWANI A. ET AL: "A Non-unit Protection Scheme for DC Microgrid Based on Local Measurements", IEEE TRANSACTIONS ON POWER DELIVERY, vol. 32, no. 1, 1 February 2017 (2017-02-01), pages 172-181, XP093261864, US ISSN: 0885-8977, DOI: 10.1109/TPWRD.2016.2555844 * equations 13,14,18, sections IV and V; pages 3-6 * | 1-9 | |
| A | KR 102 175 998 B1 (RESEARCH & BUSINESS FOUND SUNGKYUNKWAN UNIV [KR]) 6 November 2020 (2020-11-06) * paragraphs [0008] - [0010]; figures 1-5 * | 1-9 | TECHNICAL FIELDS SEARCHED (IPC) H02H H02M |
| A | EMHEMED ABDULLAH A S ET AL: "Validation of Fast and Selective Protection Scheme for an LVDC Distribution Network", IEEE TRANSACTIONS ON POWER DELIVERY, IEEE SERVICE CENTER, NEW YORK, NY, US, vol. 32, no. 3, 1 June 2017 (2017-06-01), pages 1432-1440, XP011647882, ISSN: 0885-8977, DOI: 10.1109/TPWRD.2016.2593941 [retrieved on 2017-05-01] * the whole document * | 1-9 | |

The present search report has been drawn up for all claims

| Place of search | Date of completion of the search | Examiner |
|---|---|---|
| Munich | 27 March 2025 | Gomes Guerreiro, G |

EPO FORM 1503 03.82 (P04C01)

## ANNEX TO THE EUROPEAN SEARCH REPORT
## ON EUROPEAN PATENT APPLICATION NO.

EP 24 20 5949

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2025

| Patent document cited in search report | Publication date | Patent family member(s) | Publication date |
|---|---|---|---|
| KR 102566804 B1 | 16-08-2023 | NONE | |
| KR 102175998 B1 | 06-11-2020 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• KR 1020230168548